# EUROPEAN PATENT APPLICATION

(11) **EP 3 214 345 A1**
(43) Date of publication of application: **06.09.2017**
(21) Application number: 15855793.4
(22) Date of filing: 30.03.2015
(51) Int. Cl.: F16H 57/021, F16H 57/03, F16H 57/04

(54) **TRANSMISSION CASE AND TRANSMISSION COMPRISING SAME**

(30) Priority: 31.10.2014 JP 2014222854
(71) Applicant: Aichi Machine Industry Co., Ltd., Nagoya-shi, Aichi 456-8601 (JP)
(72) Inventor: SATO Motohiko, Nagoya-shi, Aichi 456-8601 (JP); NAKADERA Hiroyuki, Nagoya-shi, Aichi 456-8601 (JP); MIYASHITA Takahiro, Nagoya-shi, Aichi 456-8601 (JP); OTSUKA Masaki, Nagoya-shi, Aichi 456-8601 (JP)
(74) Representative: Global IP Europe Patentanwaltskanzlei
(86) International application number: PCT/JP2015/059916
(87) International publication number: WO 2016/067655

(57) **Abstract**

The number of contacting faces of a transmission case (10) can be reduced by having a configuration in which an adapter plate (16) is mounted and secured to the inside of an extension case (14). Thus, the risk of lubricating oil retained inside the transmission case (10) leaking to the exterior can be reduced. Moreover, the configuration is such that a rib (30) extending in the longitudinal direction toward the adapter plate (16) is provided in the extension case (14), and when the adapter plate (16) is mounted in the extension case (14), an extended distal end (30c) of the rib (30) contacts a contact surface (17c) of the adapter plate (16). Thus, a formed gap between the extension case (14) and the adapter plate (16) is blocked and poor lubrication due to the lubricating oil moving to the extension case (14) side is suppressed.

## Description

### Technical Field

The present invention relates to a transmission case capable of retaining lubricating oil therein and a transmission including this transmission case.

### Background Art

In JP 02-134449 A (Patent Literature 1), there is disclosed a transmission case that houses an input shaft, a counter shaft placed parallel to the input shaft, an output shaft placed adjacent to the input shaft on the same straight line, and a gear mechanism that selectively connects the input shaft, the counter shaft, and the output shaft to each other. The transmission case according to Patent Literature 1 has a bulkhead that longitudinally partitions the inside of the transmission case, and the bulkhead is integrally formed in the longitudinal center of the transmission case. In the transmission case according to Patent Literature 1, the input shaft and the counter shaft are supported by the bulkhead, whereby the support stiffnesses of the shafts are enhanced, and also the flexural rigidity of the transmission case is enhanced.

### Citation List

### Patent Literature

Patent Literature 1: JP 02-134449 A

### Summary of Invention

### Technical Problem

Incidentally, the above-described transmission case has a configuration in which the bulkhead is integrally formed in the longitudinal center of the transmission case; therefore, in the manufacturing of transmission cases, the transmission case needs to be formed by being divided into three parts: a clutch housing, a case body, and an end cover, which increases the number of contacting faces between cases. Accordingly, the number of portions requiring to be sealed increases, and the risk of oil leakage increases. There can be considered a configuration in which a bulkhead formed separately from the transmission case is installed and fixed inside the transmission case, thereby suppressing the number of divisions of the transmission case and reducing the number of contacting faces between cases; however, in this configuration, structurally, a gap is formed between the inner periphery of the transmission case and the outer periphery of the bulkhead, and therefore, lubricating oil retained inside the transmission case can move freely in a direction along a longitudinal direction of the transmission case. This causes the lack of lubricating oil inside the transmission case, which results in the degradation of lubricating performance.

The present invention has been made in view of the above, and one object of the invention is to provide a technology that can satisfy both the reduction in the risk of oil leakage and the improvement in lubricating performance.

### Solution to Problem

A transmission case and a transmission including the same according to the present invention adopt the following means to achieve the above-described object.

According to a preferred configuration of the transmission case according to the present invention, the transmission case is configured to be capable of retaining lubricating oil therein. The transmission case includes a first case member, a second case member that is connected to the first case member, and a bulkhead member that is attached to the inside of the second case member and partitions the inside of the transmission case into the side of the first case member and the side of the second case member. Then, on at least one of the second case member and the bulkhead member, a blocking part that blocks a gap between the second case member and the bulkhead member is formed at least in a lower part of the transmission case in which lubricating oil is retained.

The term "the blocking part is formed" in the present invention typically falls into an aspect in which the blocking part is integrally formed with the second case member or the bulkhead member, and preferably includes an aspect in which the blocking part is formed separately from the second case member or the bulkhead member and then attached to the second case member or the bulkhead member as one.

According to the present invention, the bulkhead member is attached to the inside of the second case member; therefore, unlike a conventional configuration in which the bulkhead member is integrally formed with the transmission case, there is no need to divide the transmission case into three parts, so that the number of contacting faces between case members composing the transmission case can be suppressed. That is, the number of sealing surfaces for preventing the leakage of lubricating oil retained inside the transmission case can be reduced, and therefore, the risk of oil leakage can be reduced.

Furthermore, the bulkhead member is attached to the inside of the second case member, whereby a gap formed between the second case member and the bulkhead member is blocked by the blocking part at least in the lower part of the transmission case in which lubricating oil is retained; therefore, at least in the lower part of the transmission case, it is possible to suppress the lubricating oil from freely moving from the side of the first case member to the side of the second case member or from the side of the second case member to the side of the first case member through the gap. Accordingly, it is possible to suppress the occurrence of the lack of lubricating oil on the side of the first case member or the side of the second case member, and therefore, it is possible to improve the lubricating performance.

According to another configuration of the transmission case according to the present invention, the second case member has a longitudinal direction. Furthermore, the blocking part has a rib or ribs extending from at least one of the second case member and the bulkhead member toward the facing bulkhead member or second case member in the longitudinal direction. Then, the blocking part is configured to block a gap between the second case member and the bulkhead member by bringing a distal end portion of the rib or distal ends of the ribs into contact with an end surface of the bulkhead member or second case member facing the distal end portion of the rib or by bringing respective distal end portions of the ribs into contact with each other.

Incidentally, as an aspect of "extending toward the facing bulkhead member or second case member in the longitudinal direction" in the present invention, typically, the aspect falls into an aspect of extending in a direction along the longitudinal direction toward the bulkhead member or the second case member.

If there is adopted a configuration configured to blocked the gap between the second case member and the bulkhead member by bringing the outer periphery of the bulkhead member into contact with the inner periphery of the second case member, not only the external shape of the bulkhead member and the internal shape of the second case member require the high dimensional accuracy, but also it becomes difficult to attach the bulkhead member to the second case member. However, the present configuration is configured to block the gap by bringing the bulkhead member into contact with the second case member in a direction of attaching the bulkhead member to the second case member, i.e. in a longitudinal direction of the second case member through the rib; therefore, the external shape of the bulkhead member and the internal shape of the second case member do not require the high dimensional accuracy, and the attachment performance of the bulkhead member to the inside of the second case member is not degraded.

Furthermore, the rib or the ribs extend in a direction along the longitudinal direction of the second case member, i.e. in a direction along a casting direction when molding internal space of the second case member; therefore, the rib or the ribs can be formed at the same time as internal space of the second case member is formed, and, even if the rib or the ribs are formed on the side of the second case member, which does not cause the degradation of the manufacturability of the second case member.

According to still another configuration of the transmission case according to the present invention, the rib or the ribs are configured to be along the outer edge of the bulkhead member. According to the present configuration, the gap between the second case member and the bulkhead member is blocked near the outer edge of the bulkhead member; therefore, the amount of lubricating oil flowing into the side of the second case member through the gap between the outer periphery of the bulkhead member and the inner periphery of the second case member can be kept to the minimum.

According to still another configuration of the transmission case according to the present invention, the rib or the ribs are formed at least up to a vertical level equal to or higher than the oil level of lubricating oil in a steady state. The "vertical (direction)" in the present invention falls into a direction roughly along the vertical direction of the transmission case in a state where a vehicle is equipped with the transmission including the transmission case. Furthermore, the "steady state" in the present invention falls into a state where the oil level of lubricating oil retained in the transmission case is stable, and preferably includes the case where the oil level is stable with the oil level parallel to the horizontal plane and the case where the oil level is stable with the oil level tilted to the horizontal plane.

Here, "the case where the oil level is stable with the oil level tilted to the horizontal plane" typically falls into the state of the oil level when a vehicle equipped with the transmission including the transmission case is travelling by increasing and reducing the speed at a constant acceleration and deceleration rate and the state of the oil level when the vehicle is travelling hill-climbing and traveling down-hill.

Furthermore, as an aspect of "being formed up to a level equal to or higher than the oil level of lubricating oil" in the present invention, the aspect preferably includes an aspect of the rib having a level corresponding to the oil level varying according to the shape of the oil level and an aspect of the rib having a level a constant level equal to or higher than the highest oil level. According to the present configuration, at least in the steady state, it is possible to suppress lubricating oil from moving to the side of the second case member beyond the rib.

According to still another configuration of the transmission case according to the present invention, the bulkhead member supports a rotating body capable of scooping up lubricating oil. Then, a portion of the rib or portions of the ribs located on the upstream side in a rotation direction of the rotating body is formed up to a vertical level higher than a vertical level of a portion of the rib or portions of the ribs located on the downstream side in the rotation direction of the rotating body.

According to the present configuration, the rotating body is supported by the bulkhead member; therefore, as compared with a configuration in which the rotating body is supported by only the first case member or the second case member, the support stiffness can be improved. Furthermore, the rib or the ribs are configured such that the vertical level of the portion or the portions on the upstream side in the rotation direction of the rotating body is higher than the vertical level of the portion or the portions on the downstream side in the rotation direction of the rotating body; therefore, even when the oil level on the upstream side in the rotation direction has become higher than the oil level on the downstream side in the rotation direction by the rotation of the rotating body, it is possible to suppress lubricating oil from moving from the side of the first case member to the side of the second case member beyond the rib, effectively.

According to still another configuration of the transmission case according to the present invention, the bulkhead member has a through hole penetrating in the longitudinal direction at a position which is in the lower part of the transmission case and above the blocking part.

According to the present configuration, even when lubricating oil has moved from the side of the first case member to the side of the second case member beyond the rib, the lubricating oil can return from the side of the second case member back to the side of the first case member through the through hole.

According to still another configuration of the transmission case according to the present invention, the second case member has a bulkhead-member attachment surface to which the bulkhead member is attached. The bulkhead member has a second-case-member attachment surface attached to the bulkhead-member attachment surface. Then, a distal end portion of a rib and an end surface of the second case member or bulkhead member facing the distal end portion of the rib or respective distal end portions of the ribs are in contact with each other on a virtual plane including a contact plane in contact with the bulkhead-member attachment surface and the second-case-member attachment surface.

According to the present configuration, in a case where only the second case member has a rib or ribs, machine work for ensuring the flatness can be performed on the bulkhead-member attachment surface and the distal end portion of the rib or the distal end portions of the ribs simultaneously, and also machine work for ensuring the flatness can be performed on the second-case-member attachment surface and a portion of the end surface of the bulkhead member in contact with the distal end portion of the rib or the distal end portions of the ribs simultaneously. On the other hand, in a case where only the bulkhead member has a rib or ribs, machine work for ensuring the flatness can be performed on the second-case-member attachment surface and the distal end portion of the rib or the distal end portions of the ribs simultaneously, and also machine work for ensuring the flatness can be performed on the bulkhead-member attachment surface and a portion of the end surface of the second case member in contact with the distal end portion of the rib or the distal end portions of the ribs simultaneously. Incidentally, in a case where both the second case member and the bulkhead member have a rib, machine work for ensuring the flatness can be performed on the bulkhead-member attachment surface and the distal end portion of the rib or the distal end portions of the ribs of the second case member simultaneously, and also machine work for ensuring the flatness can be performed on the second-case-member attachment surface and the distal end portion of the rib or the distal end portions of the ribs of the bulkhead member simultaneously. Accordingly, the workability can be improved. Furthermore, the blocking of the gap between the second case member and the bulkhead member can be improved.

According to a preferred configuration of the transmission according to the present invention, the transmission includes an input shaft, a counter shaft that is placed parallel to the input shaft, an output shaft that is placed coaxially with and adjacent to the input shaft, a gear mechanism that is able to transmit power input to the input shaft to the output shaft through the counter shaft or directly, and the above-described transmission case according to any of the aspects. Then, at least any one of the input shaft, the counter shaft, and the output shaft is supported by a bulkhead member.

According to the present invention, by including the above-described transmission case according to any of the aspects of the present invention, there can be achieved the same effects as those achieved by the transmission case in the present invention, such as the effect of being able to improve the support stiffnesses of the input shaft, the counter shaft, and the output shaft as well as the effect that the number of sealing surfaces for preventing the leakage of lubricating oil retained inside the transmission case can be reduced, whereby the risk of oil leakage can be reduced, the effect that the occurrence of the lack of lubricating oil on the side of the first case member or the side of the second case member can be suppressed, thereby the lubricating performance can be improved, and the effect of being able to prevent the degradation of the assembly and the degradation of the manufacturability. Consequently, the quality of the transmission can be improved, and also the reliability of the transmission can be improved.

### Advantageous Effects of Invention

According to the present invention, it is possible to provide a technology that can satisfy both the reduction in the risk of oil leakage and the improvement in lubricating performance.

### Brief Description of Drawings

Fig. 1 is a cross-sectional view illustrating a schematic configuration of a transmission 1 including a transmission case 10 according to an embodiment.
Fig. 2 is a front view of an extension case 14.
Fig. 3 is a cross-sectional view of the extension case 14 along a line A-A illustrated in Fig. 2.
Fig. 4 is a cross-sectional view of the extension case 14 along a line B-B illustrated in Fig. 2.
Fig. 5 is a front view illustrating a state where an adapter plate 16 is attached to the extension case 14.
Fig. 6 is a front view of the adapter plate 16.
Fig. 7 is a rear view of the adapter plate 16 viewed from the rear.
Fig. 8 is a cross-sectional view of the transmission case 10 along a line E-E illustrated in Fig. 5.
Fig. 9 is a cross-sectional view of the transmission case 10 along a line F-F illustrated in Fig. 5.
Fig. 10 is an explanatory diagram illustrating a state where external force in a rotation direction of a counter shaft 4 has acted on lubricating oil with the operation of the transmission 1.
Fig. 11 is an explanatory diagram illustrating a state where external force in a backward direction along a longitudinal direction of the transmission 1 has acted on lubricating oil while the transmission 1 is in operation.

### Description of Embodiments

Subsequently, an embodiment of the present invention is described with an example.

### Example

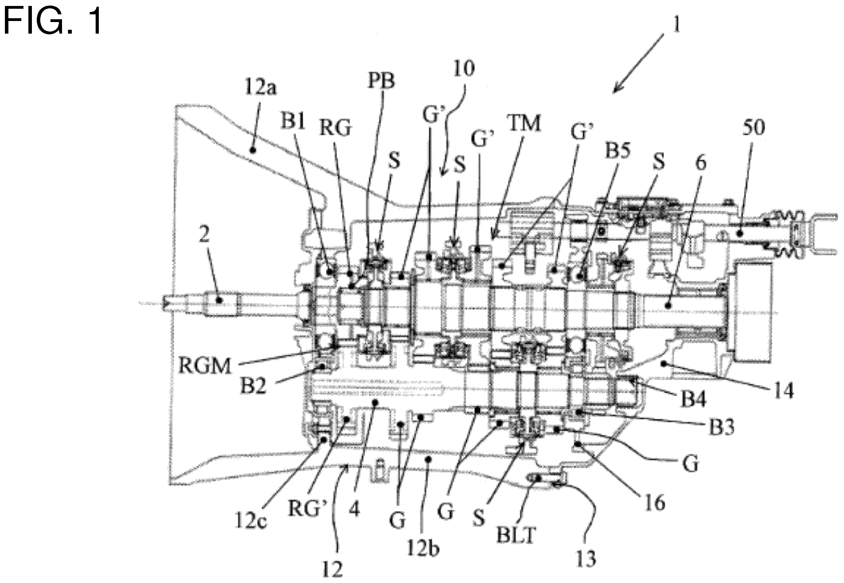

A transmission 1 includes, as illustrated in Fig. 1, an input shaft 2, a counter shaft 4 placed parallel to the input shaft 2, an output shaft 6 placed coaxially with the input shaft 2, a reduction gear mechanism RGM that connects the input shaft 2 to the counter shaft 4, a transmission mechanism TM that connects the input shaft 2 or the counter shaft 4 to the output shaft 6, and a transmission case 10 according to the embodiment of the present invention that houses the above components. Incidentally, the counter shaft 4 is an example of an implementation configuration corresponding to a "rotating body" and a "counter shaft" in the present invention. Furthermore, the reduction gear mechanism RGM and the transmission mechanism TM are an example of an implementation configuration corresponding to a "gear mechanism" in the present invention.

Incidentally, in the present embodiment, for convenience of description, the side on which the input shaft 2 is placed in a longitudinal direction of the transmission 1 (the lower side of the plane of paper in Fig. 1) is defined as "the front side" or "the front," and the side on which the output shaft 6 is placed (the upper side of the plane of paper in Fig. 1) is defined as "the back side" or "the back." Furthermore, the side on which a control rod 50 is placed (the left side of the plane of paper in Fig. 1) is defined as "the upside" or "the upper side," and the side on which the counter shaft 4 is placed (the right side of the plane of paper in Fig. 1) is defined as "the underside" or "the lower side."

The input shaft 2 is a shaft to which power of an engine (not illustrated) is input through a clutch (not illustrated), and, as illustrated in Fig. 1, is rotatably supported by a later-described case body 12 in the transmission case 10 through a bearing B1. On a back end portion of the input shaft 2 (a portion on the opposite side of the side on which the clutch is placed), a reduction drive gear RG is integrally formed as illustrated in Fig. 1.

As illustrated in Fig. 1, a front end portion, a middle portion, and a back end portion of the counter shaft 4 are rotatably supported by the transmission case 10 through bearings B2, B3, and B4, respectively. Specifically, the front end portion of the counter shaft 4 is rotatably supported by the case body 12 through the bearing B2; the middle portion of the counter shaft 4 is rotatably supported by a later-described adapter plate 16 in the transmission case 10 through the bearing B3; and the back end portion of the counter shaft 4 is rotatably supported by a later-described extension case 14 in the transmission case 10 through the bearing B4.

That is, the counter shaft 4 is supported by the transmission case 10 at the three points: the front end portion, the middle portion, and the back end portion. Accordingly, the support stiffness of the counter shaft 4 is improved. Furthermore, on a portion that is the front end portion of the counter shaft 4 and is located posterior to the portion supported by the case body 12 through the bearing B2, a reduction driven gear RG' engaged with the reduction drive gear RG is integrally formed. The gear diameter of the reduction driven gear RG' is formed to be larger than that of the reduction drive gear RG. Accordingly, the rotation of the input shaft 2 with its rotation rate reduced is transmitted to the counter shaft 4. The reduction gear mechanism RGM includes the reduction driven gear RG' and the reduction drive gear RG.

The output shaft 6 is a shaft for outputting power, and, as illustrated in Fig. 1, one end thereof is inserted into the input shaft 2 and is rotatably supported by the input shaft 2 through a pilot bearing PB, and a middle portion thereof is rotatably supported by the adapter plate 16 in the transmission case 10 through a bearing B5.

Furthermore, a back end portion of the output shaft 6 is supported by the extension case 14 through a sleeve yoke of a propeller shaft (not illustrated). That is, the output shaft 6 is supported by the transmission case 10 at the three points: the front end portion, the middle portion, and the back end portion. Accordingly, the support stiffness of the output shaft 6 is improved.

As illustrated in Fig. 1, the transmission mechanism TM includes a plurality of drive gears G installed on the counter shaft 4, a plurality of driven gears G' that are engaged with the drive gears G and are installed on the output shaft 6, and a plurality of synchromeshes S that selectively fix, of the drive gears G and the driven gears G', a gear (an idling gear) installed so as to be able to rotate relative to the counter shaft 4 or the output shaft 6 to the counter shaft 4 or the output shaft 6. Power transmitted to the counter shaft 4 is output to the output shaft 6 through the transmission mechanism TM.

The transmission case 10 includes, as illustrated in Fig. 1, the case body 12, the extension case 14 that is attached and fixed to the case body 12 with a bolt BLT, and the adapter plate 16 that is attached and fixed to the inside of the extension case 14 with a bolt (not illustrated).

The lower part of the transmission case 10 constitutes a lubricating-oil retaining part for retaining lubricating oil therein. Components of the transmission 1, such as the input shaft 2, the counter shaft 4, the output shaft 6, the reduction gear mechanism RGM, the transmission mechanism TM, the bearings B1, B2, B3, B4, and B5, and the pilot bearing PB, are lubricated with the lubricating oil. The case body 12 corresponds to a "first case member" in the present invention; the extension case 14 corresponds to a "second case member" in the present invention; the adapter plate 16 is an example of an implementation configuration corresponding to a "bulkhead member" in the present invention.

As illustrated in Fig. 1, the case body 12 includes a clutch housing part 12a for housing a clutch (not illustrated) and a body part 12b; the clutch housing part 12a is formed into a nearly hand drum shape of which the front side and the back side are open across a bulkhead part 12c installed in the middle thereof, the body part 12b constituting a major part of housing space for housing components of the transmission 1, such as the input shaft 2, the counter shaft 4, the output shaft 6, the reduction gear mechanism RGM, the transmission mechanism TM, the bearings B1, B2, B3, B4, and B5, and the pilot bearing PB. On a back opening end of the body part 12b, an attachment surface 13 for attachment and fixation of the extension case 14 is formed. The clutch housing part 12a, the body part 12b, and the bulkhead part 12c are integrally formed.

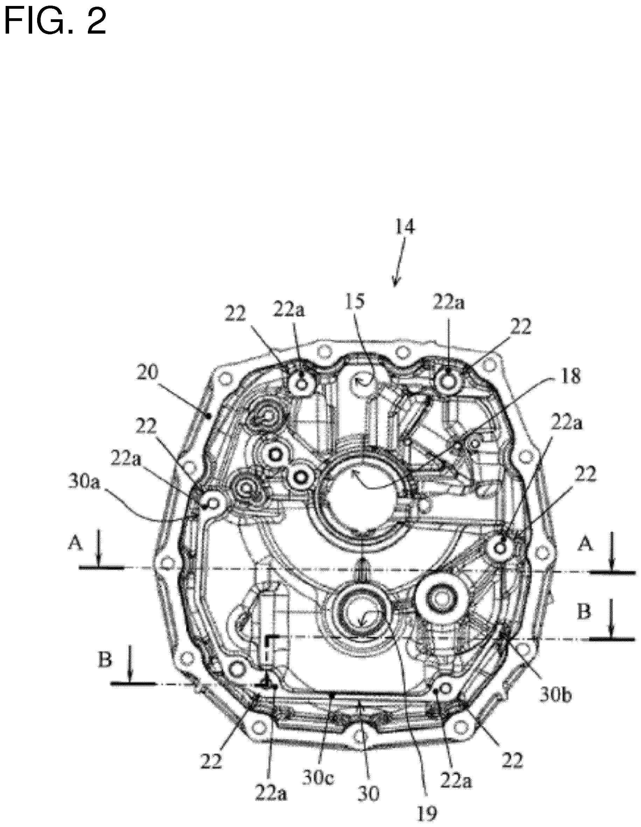

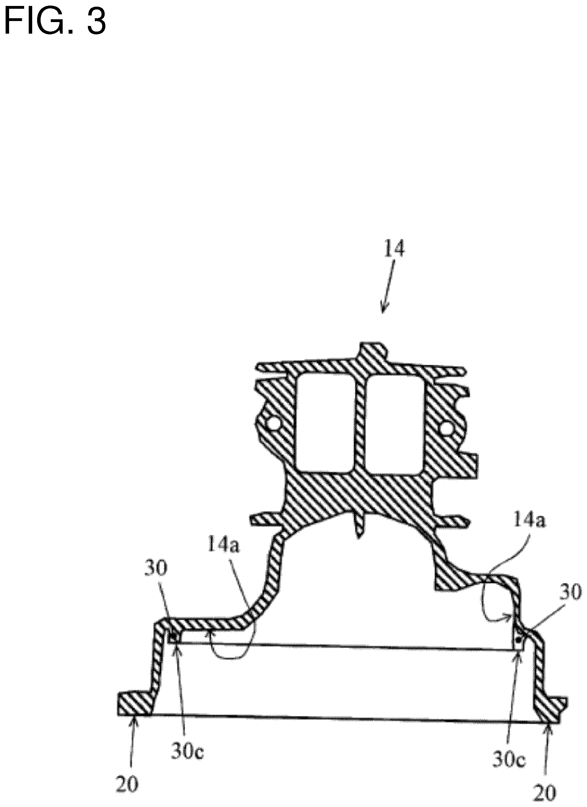

As illustrated in Figs. 1, 3, and 4, the extension case 14 is formed into a nearly conical shape of which the front side (the side attached to the case body 12, the underside in Figs. 1, 3, and 4) is open and the external shape is gradually reduced in radially diameter from the front side toward the back side (the upside in Figs. 1, 3, and 4). On the extension case 14, as illustrated in Fig. 2, a through hole 15 into which the control rod 50 is inserted, a through hole 18 into which the output shaft 6 is inserted, and an insertion recessed portion 19 into which the counter shaft 4 is inserted are formed in order from top.

On an opening end of the extension case 14, as illustrated in Figs. 2 to 4, an attachment surface 20 in contact with the attachment surface 13 of the case body 12 is formed. Furthermore, at the position on the slightly inner side of a peripheral wall internal face 14a of the extension case 14 in a radial direction, a plurality of attachment bosses 22 for attachment and fixation of the adapter plate 16 are formed along the peripheral wall internal face 14a.

Moreover, the attachment bosses 22 each have a contact surface 22a in contact with the adapter plate 16. As illustrated in Fig. 2, the contact surfaces 22a face in the same direction as the direction in which the attachment surface 20 faces, i.e. a longitudinal direction of the extension case 14. The contact surfaces 22a are an example of an implementation configuration corresponding to a "bulkhead-member attachment surface" in the present invention.

Furthermore, on the extension case 14, as illustrated in Figs. 1, 3, and 4, a rib 30 extending in a direction along the longitudinal direction of the extension case 14 is formed from the peripheral wall internal face 14a toward the opening. The rib 30 is an example of an implementation configuration corresponding to a "blocking part" or a "rib" in the present invention.

As described above, the rib 30 extends in a direction along a casting direction when molding internal space of the extension case 14; therefore, the rib 30 can be formed at the same time as internal space of the extension case 14 is formed. Accordingly, the rib 30 can be formed without the degradation of the manufacturability of the extension case 14.

As illustrated in Fig. 2, the rib 30 is formed on the lower part (the underside in Fig. 2) of the extension case 14, specifically, at the position lower than an upper end portion of the through hole 18 into which the output shaft 6 is inserted. The rib 30 is formed into, when viewed from front, a nearly inverted J shape along the shape of the lower outer edge of the adapter plate 16. Specifically, the rib 30 extends from, of the plurality of attachment bosses 22, an attachment boss 22 located on the left of the through hole 18 in Fig. 2, meeting two attachment bosses 22 formed on the lowest part counterclockwise, to about the intermediate position between an attachment boss 22 located on the bottom-right-side in Fig. 2 and an attachment boss 22 located on the right side in Fig. 2.

That is, as illustrated in Fig. 2, in consideration of the tilting of lubricating oil in a rotation direction as will be described in detail later, the rib 30 is configured such that one end 30a is located at the level corresponding to about the center of the through hole 18, and, on the other hand, the other end 30b is located at the level slightly lower than the center of the insertion recessed portion 19. Incidentally, in the present embodiment, the other end 30b of the rib 30 is configured so as to be located at the level equal to or higher than the oil level of lubricating oil in a stationary condition.

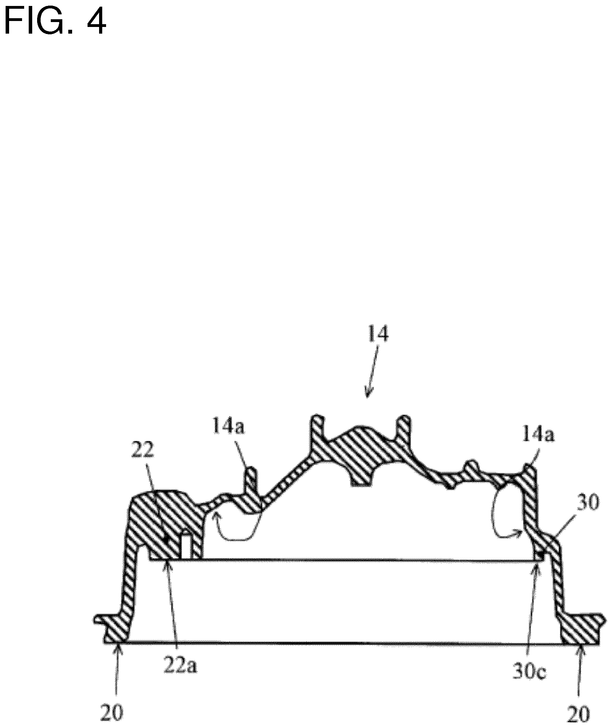

Furthermore, as illustrated in Fig. 4, an extended distal end 30c of the rib 30 is configured so as to be flush with the contact surfaces 22a of the attachment bosses 22. Here, attachment bosses 22 located above (the upper side in Fig. 2) the rib 30 are configured as independent bosses as illustrated in Fig. 2.

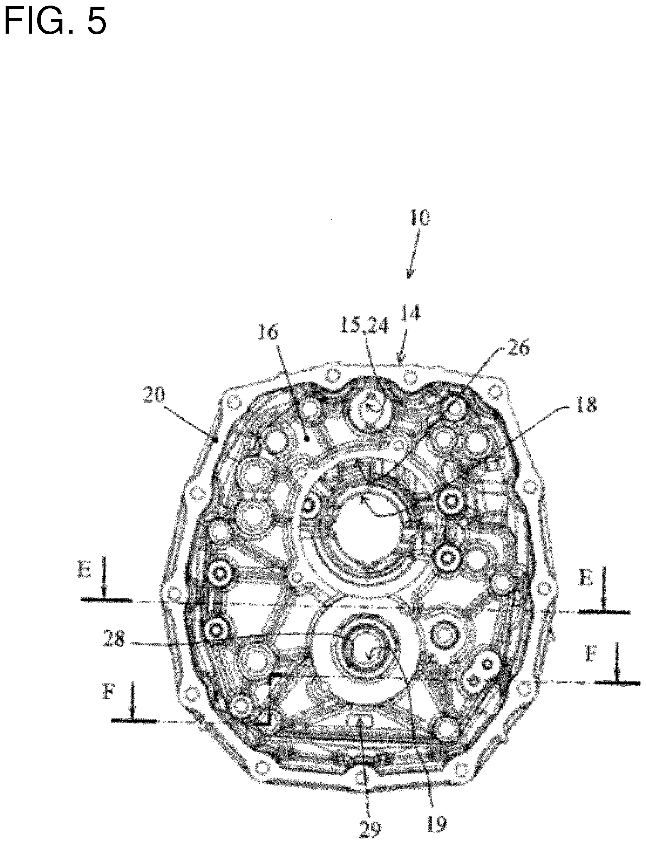

As illustrated in Fig. 5, the adapter plate 16 is configured as a vertically long (having the long axis in a vertical direction in Fig. 5), nearly elliptical plate-like member that is about the same shape as the internal shape of the extension case 14 when viewed from front. The adapter plate 16 not only improves the support stiffnesses of the counter shaft 4 and the output shaft 6, but also contributes to improving the flexural rigidity of the transmission case 10.

On the adapter plate 16, as illustrated in Figs. 5 to 7, a through hole 24 into which the control rod 50 is inserted, a through hole 26 into which the output shaft 6 is inserted, and a through hole 28 into which the counter shaft 4 is inserted are formed in order from top.

The through holes 24, 26, and 28 are formed so as to have the same axis as the through holes 15, 18 and the insertion recessed portion 19 formed on the extension case 14, respectively.

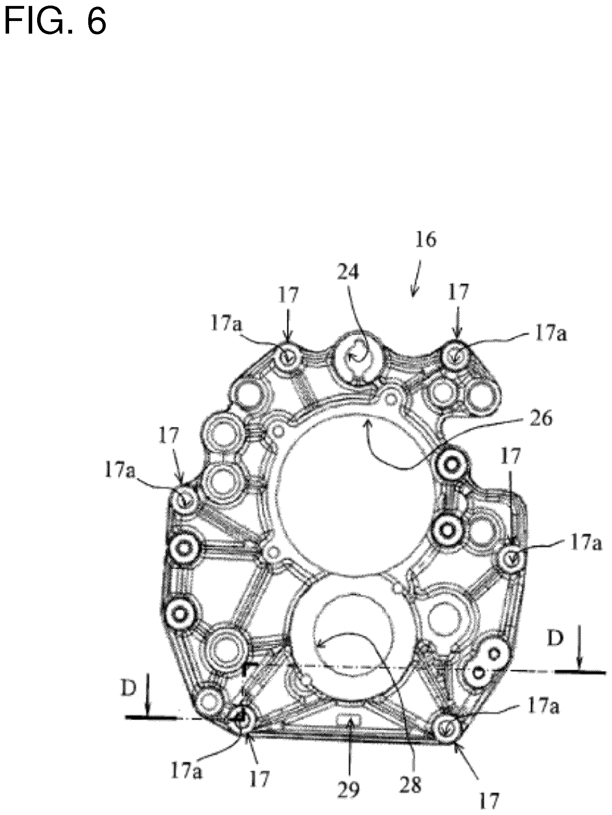

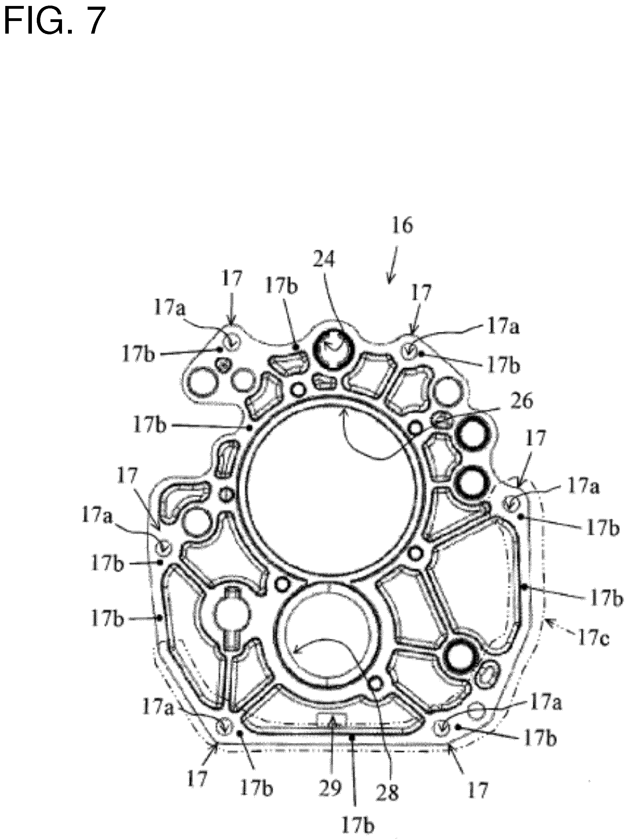

Furthermore, on the outer edge of the adapter plate 16, as illustrated in Figs. 6 and 7, a plurality of attachment boss portions 17 corresponding to the attachment bosses 22 of the extension case 14 are formed. On each of the attachment boss portions 17, a through hole 17a for insertion of an attachment bolt (not illustrated) is formed.

As illustrated in Fig. 7, the attachment boss portions 17 each have an attachment surface 17b in contact with the contact surface 22a. As illustrated in Fig. 7, the attachment surfaces 17b are formed in succession in a circumferential direction of the adapter plate 16 in a circular pattern, and connect the attachment boss portions 17 in the circumferential direction. The attachment surfaces 17b are an example of an implementation configuration corresponding to a "second-case-member attachment surface" in the present invention.

Furthermore, as illustrated in Fig. 7, the lower part of the attachment surface 17b constitutes a contact surface 17c in contact with the extended distal end 30c of the rib 30 in the extension case 14. Moreover, on the lower part of the adapter plate 16, specifically, on a portion between the through hole 28 and the lowermost end of the adapter plate 16, as illustrated in Figs. 6 and 7, a through hole 29 penetrating in a through-thickness direction is formed. The contact surface 17c is an example of an implementation configuration corresponding to the "blocking part" or an "end surface of the bulkhead member" in the present invention.

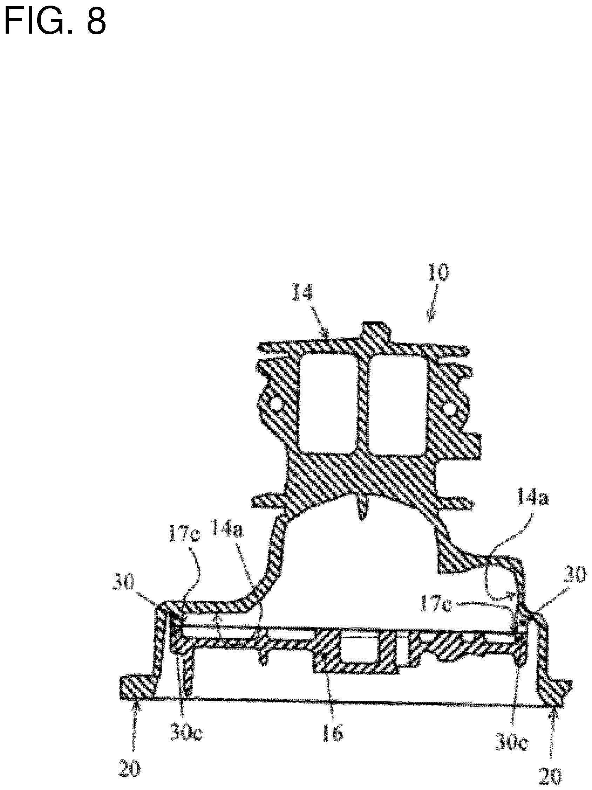

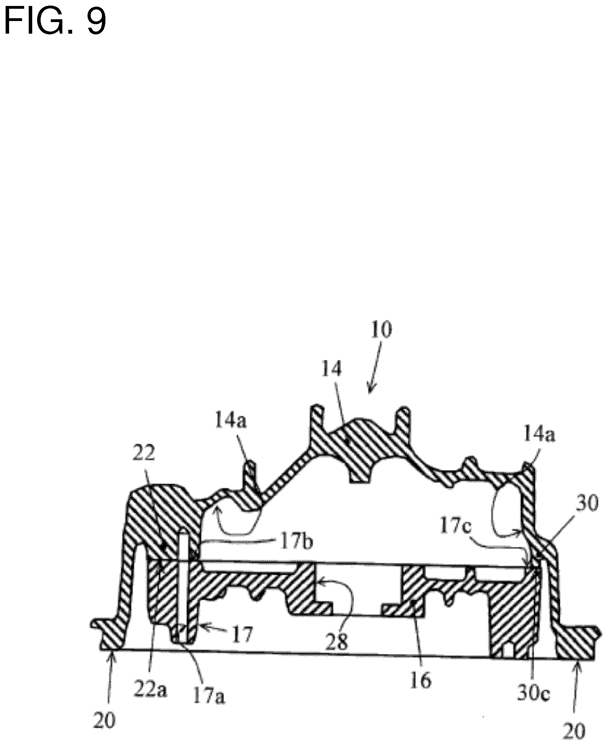

As illustrated in Figs. 8 and 9, the adapter plate 16 is inserted into the extension case 14 from the side of the opening of the extension case 14, and, in a state where the attachment surfaces 17b are in contact with the contact surfaces 22a and the contact surface 17c is in contact with the extended distal end 30c of the rib 30, is attached and fixed to the extension case 14 with an attachment bolt (not illustrated).

Here, the external shape of the adapter plate 16 is formed to have smaller dimensions than the internal shape of a portion of the extension case 14 from the opening to the contact surfaces 22a; therefore, the adapter plate 16 can be easily inserted into the extension case 14.

As described above, in the present embodiment, the adapter plate 16 is formed separately from the case body 12 and the extension case 14, and the separately formed adapter plate 16 is attached and fixed inside the extension case 14, and after that, the extension case 14 with the adapter plate 16 attached and fixed inside thereof is attached and fixed to the case body 12 with the bolt BLT, whereby the transmission case 10 is formed.

Therefore, the transmission case 10 has only one contacting face including the attachment surface 13 of the case body 12 and the attachment surface 20 of the extension case 14 in contact with the attachment surface 13. In other words, the transmission case 10 has only one sealing surface; therefore, as compared with a configuration in which the transmission case 10 is divided into three or more parts and has two or more sealing surfaces; therefore, the risk of lubricating oil retained inside the transmission case 10 leaking out can be reduced.

Then, the adapter plate 16 is attached and fixed inside the extension case 14, and the contact surface 17c comes in contact with the extended distal end 30c, whereby the lower part of the extension case 14, specifically, a gap between the extension case 14 and the adapter plate 16 in the area where the rib 30 has been formed is blocked.

That is, within the area where the rib 30 has been formed, the communication between the inside of the body part 12b of the case body 12 and the inside of the extension case 14 is blocked. Incidentally, in a part other than the area where the rib 30 has been formed, a gap (a gap between the peripheral wall internal face 14a of the extension case 14 and the outer periphery of the adapter plate 16 and a longitudinally extending gap between the attachment surface 17b of the adapter plate 16 and the peripheral wall internal face 14a of the extension case 14) is formed between the extension case 14 and the adapter plate 16, so that the inside of the body part 12b of the case body 12 communicates with the inside of the extension case 14.

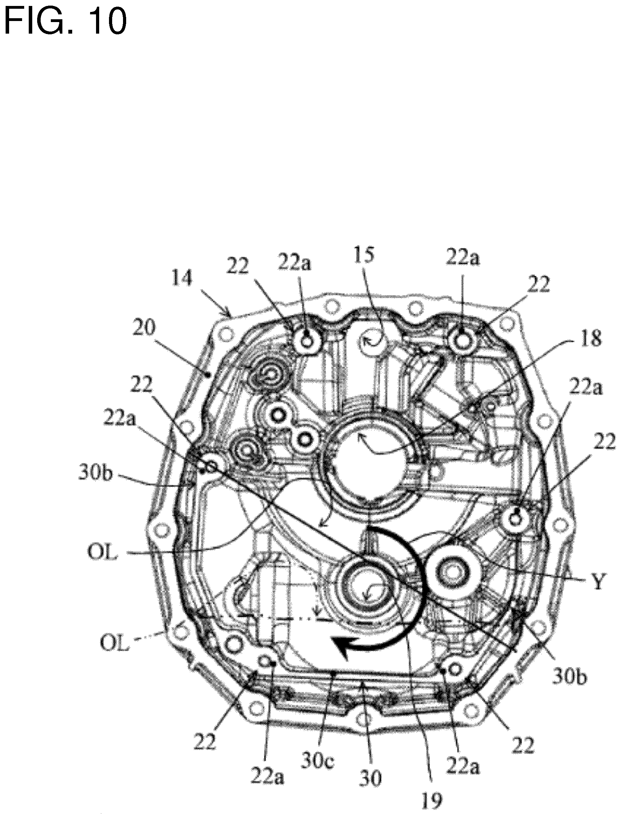

Subsequently, there is described the movement of lubricating oil retained in the transmission 1 configured as described above, particularly, the movement of lubricating oil when external force in a direction along the longitudinal direction of the transmission 1 acts on the lubricating oil while the transmission 1 is in operation. When the counter shaft 4 rotates (in a direction of an arrow Y in Fig. 10) with the operation of the transmission 1, lubricating oil is scooped up by the drive gears G, and, as illustrated in Fig. 10, the lubricating oil is tilted so that an oil level OL on the upstream side in the rotation direction (the left side in Fig. 10) reaches a level higher than an oil level OL on the downstream side in the rotation direction (the right side in Fig. 10) (a solid line OL in Fig. 10).

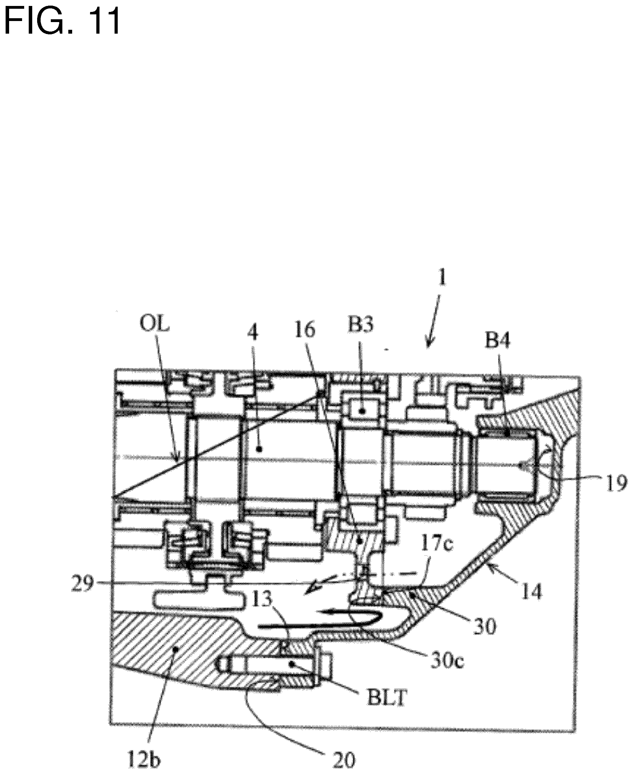

Further, in this state, when external force in a backward direction along the longitudinal direction of the transmission 1 acts on the lubricating oil, the lubricating oil is also tilted in the longitudinal direction (a solid line OL in Fig. 11). Specifically, the lubricating oil is tilted so that an oil level OL on the back side in the longitudinal direction in the transmission case 10 (the right side in Fig. 11) reaches a level higher than an oil level OL on the front side in the longitudinal direction (the left side in Fig. 11).

Incidentally, as the case where external force in the backward direction along the longitudinal direction of the transmission 1 acts on the lubricating oil, there can be considered when a vehicle equipped with the transmission 1 is peeled out, when the vehicle is suddenly accelerated, when the vehicle travels uphill, or when the vehicle travels with a combination of these.

At this time, by the contact between the contact surface 17c of the adapter plate 16 and the extended distal end 30c of the rib 30 of the extension case 14, a lower part of a gap between the adapter plate 16 and the extension case 14 is blocked, and the communication between the inside of the body part 12b of the case body 12 and the inside of the extension case 14 is blocked; therefore, the movement of the lubricating oil from the side of the body part 12b to the side of the extension case 14 is suppressed (a solid line arrow in Fig. 11).

In addition, in consideration of the tilting of the lubricating oil in the rotation direction, the end 30a of the rib 30 is configured such that the vertical level of the end 30a is located at the level corresponding to about the center of the through hole 18; therefore, the movement of the lubricating oil from the side of the body part 12b to the side of the extension case 14 can be suppressed effectively.

Incidentally, in this example, the level of the end 30a of the rib 30 is set so as to be located at the level higher than the oil level OL even when a vehicle equipped with the transmission 1 has been peeled out with the first gear so that the oil level OL of the lubricating oil has been tilted to the rotation direction and the back side of the longitudinal direction.

Furthermore, the rib 30 is formed into a shape along the shape of the lower outer edge of the adapter plate 16, and configured to block a gap between the adapter plate 16 and the extension case 14 in the position closer to the outer periphery of the adapter plate 16, in other words, closer to the peripheral wall internal face 14a of the extension case 14; therefore, the amount of lubricating oil flowing into the extension case 14 through the gap between the outer periphery of the adapter plate 16 and the peripheral wall internal face 14a of the extension case 14 can be kept to the minimum. Accordingly, the movement of the lubricating oil from the side of the body part 12b to the side of the extension case 14 can be suppressed more effectively.

Moreover, the other end 30b of the rib 30 is configured so as to be located at the level vertically higher than the oil level of the lubricating oil (a dashed-two dotted line OL in Fig. 10) in a stationary condition (a steady state); therefore, at least while a vehicle equipped with the transmission 1 is at a stop, it is possible to suppress the lubricating oil from flowing into the extension case 14 beyond the rib 30.

As described above, in the present embodiment, the movement of lubricating oil retained inside the body part 12b of the case body 12 to inside the extension case 14 can be suppressed effectively; therefore, it is possible to suppress the occurrence of the lack of lubricating oil inside the body part 12b, particularly, on the front side of the body part 12b.

Accordingly, components of the transmission 1, such as the input shaft 2, the counter shaft 4, the output shaft 6, the reduction gear mechanism RGM, the transmission mechanism TM, the bearings B1, B2, B3, B4, and B5, and the pilot bearing PB, can be lubricated well.

Incidentally, lubricating oil that has been scattered by being scooped up by the drive gears G and the synchromeshes S and moved inside the extension case 14 through the gap between the extension case 14 and the adapter plate 16 in the part other than the area where the rib 30 has been formed (the radially extending gap between the inner periphery of the extension case 14 and the outer periphery of the adapter plate 16 and the longitudinally extending gap between the attachment surface 17b of the adapter plate 16 and the peripheral wall internal face 14a of the extension case 14) returns back to inside the body part 12b through the through hole 29 formed on the lower part of the adapter plate 16 (a dashed-two dotted arrow in Fig. 11). Accordingly, the lack of lubricating oil on the front side of the body part 12b can be suppressed more certainly.

According to the above-described transmission 1 according to the embodiment of the present invention, the extended distal end 30c of the rib 30 is in contact with the contact surface 17c of the adapter plate 16 when the adapter plate 16 has been attached to the extension case 14; therefore, in the lower part of the extension case 14 where the rib 30 has been formed, a gap formed between the extension case 14 and the adapter plate 16 can be blocked.

Accordingly, the communication between the inside of the body part 12b of the case body 12 and the inside of the extension case 14 can be blocked, and it is possible to suppress lubricating oil from moving from the body part 12b to inside the extension case 14. Consequently, it is possible to suppress the occurrence of the lack of lubricating oil on the side of the body part 12b, and is possible to improve the lubricating performance.

Incidentally, the adapter plate 16 is formed separately from the case body 12 and the extension case 14 and be attached and fixed inside the extension case 14; therefore, the transmission case 10 can have only one contacting face between the case body 12 and the extension case 14. Accordingly, the risk of lubricating oil retained inside the transmission case 10 leaking out can be reduced.

In the present embodiment, the rib 30 is formed only on the lower part of the extension case 14; alternatively, the rib 30 can be formed into an annular shape so as to surround internal space of the extension case 14.

In the present embodiment, the rib 30 is integrally connected to the attachment bosses 22; however, the configuration of the rib 30 is not limited to this. For example, the rib 30 can be disposed separately from the attachment bosses 22 without being connected to the attachment bosses 22, for example, in such a manner that the rib 30 can be placed on the radially inner side or the radially outer side than the attachment bosses 22.

In the present embodiment, the other end 30b of the rib 30 is formed at the level lower than the end 30a of the rib 30; however, the configuration of the rib 30 is not limited to this. For example, the other end 30b of the rib 30 can be formed at the same level as the end 30a of the rib 30, or the other end 30b of the rib 30 can be formed at the level higher than the end 30a of the rib 30.

In the present embodiment, the rib 30 is formed on the side of the extension case 14; alternatively, the rib 30 can be formed on the side of the adapter plate 16. Alternatively, the rib 30 can be formed on both the extension case 14 and the adapter plate 16. In this case, the transmission case 10 can be configured to block the gap formed between the extension case 14 and the adapter plate 16 (the longitudinally extending gap between the attachment surface 17b of the adapter plate 16 and the peripheral wall internal face 14a of the extension case 14) by bringing the extended distal ends 30c of the both ribs 30 into contact with each other.

In the present embodiment, the rib 30 is formed into a shape along the shape of the lower outer edge of the adapter plate 16; however, the shape of the rib 30 is not limited to this. For example, the rib 30 can be formed so as to draw a straight line or a curved line (including a circular arc) crossing the adapter plate 16 in a crosswise direction when the adapter plate 16 is viewed from front.

In the present embodiment, the other end 30b of the rib 30 is configured so as to be located at the level equal to or higher than the oil level OL of lubricating oil in a stationary condition (a steady state); however, the configuration of the rib 30 is not limited to this. For example, the other end 30b of the rib 30 can be configured so as to be located at the level equal to or higher than the oil level when a vehicle equipped with the transmission 1 is travelling under predetermined conditions.

The present embodiment presents an example to embody the present invention. Therefore, the present invention is not limited to the configuration of the present embodiment.

### Reference Signs List

- 1: Transmission (Transmission)
- 2: Input shaft (Input shaft)
- 4: Counter shaft (Rotating body, Counter shaft)
- 6: Output shaft (Output shaft)
- 10: Transmission case (Transmission case)
- 12: Case body (First case member)
- 12a: Clutch housing part
- 12b: Body part
- 12c: Bulkhead part
- 13: Attachment surface
- 14: Extension case (Second case member)
- 14a: Peripheral wall internal face
- 15: Through hole
- 16: Adapter plate (Bulkhead member)
- 17: Attachment boss portion
- 17a: Through hole
- 17b: Attachment surface (Second-case-member attachment surface)
- 17c: Contact surface (Blocking part, End surface of bulkhead member)
- 18: Through hole
- 19: Insertion recessed portion
- 20: Attachment surface
- 22: Attachment boss
- 22a: Contact surface (Bulkhead-member attachment surface)
- 24: Through hole
- 26: Through hole
- 28: Through hole
- 29: Through hole (Through hole)
- 30: Rib (Blocking part, rib)
- 30a: One end
- 30b: Other end
- 30c: Extended distal end
- 50: Control rod
- RGM: Reduction gear mechanism (Gear mechanism)
- TM: Transmission mechanism (Gear mechanism)
- B1: Bearing
- B2: Bearing
- B3: Bearing
- B4: Bearing
- B5: Bearing
- PB: Pilot bearing
- RG: Reduction drive gear
- RG': Reduction driven gear
- G: Drive gear
- G': Driven gear
- S: Synchromesh
- BLT: Bolt
- OL: Oil level

## Claims

1. A transmission case capable of retaining lubricating oil therein, the transmission case comprising:
a first case member;
a second case member that is connected to the first case member; and
a bulkhead member that is attached to inside of the second case member and partitions inside of the transmission case into side of the first case member and side of the second case member, wherein
on at least one of the second case member and the bulkhead member, a blocking part that blocks a gap between the second case member and the bulkhead member is formed at least in a lower part of the transmission case in which the lubricating oil is retained.

2. The transmission case according to claim 1, wherein
the second case member has a longitudinal direction, and
the blocking part has a rib or ribs extending from at least one of the second case member and the bulkhead member toward the facing bulkhead member or second case member in the longitudinal direction, and is configured to block the gap by bringing a distal end portion of the rib or distal ends of the ribs into contact with an end surface of the second case member or bulkhead member facing the distal end portion of the rib or by bringing respective distal end portions of the ribs into contact with each other.

3. The transmission case according to claim 2, wherein the rib or the ribs are configured to be along an outer edge of the bulkhead member.

4. The transmission case according to claim 2 or 3, wherein the rib or the ribs are formed at least up to a vertical level equal to or higher than an oil level of the lubricating oil in a steady state.

5. The transmission case according to any one of claims 2 to 4, wherein
the bulkhead member supports a rotating body capable of scooping up the lubricating oil, and
the rib or the ribs are formed such that a vertical level of a portion of the rib or portions of the ribs located on upstream side in a rotation direction of the rotating body is higher than a vertical level of a portion of the rib or portions of the ribs located on downstream side in the rotation direction of the rotating body.

6. The transmission case according to any one of claims 1 to 5, wherein the bulkhead member is configured to have a through hole penetrating in the longitudinal direction at a position which is in the lower part of the transmission case and above the blocking part.

7. The transmission case according to any one of claims 2 to 6, wherein
the second case member has a bulkhead-member attachment surface to which the bulkhead member is attached,
the bulkhead member has a second-case-member attachment surface attached to the bulkhead-member attachment surface, and
a distal end portion of the rib and an end surface of the second case member or bulkhead member facing the distal end portion of the rib or respective distal end portions of the ribs are configured in contact with each other on a virtual plane including a contact plane in contact with the bulkhead-member attachment surface and the second-case-member attachment surface.

8. A transmission comprising:
an input shaft;
a counter shaft that is placed parallel to the input shaft;
an output shaft that is placed coaxially with and adjacent to the input shaft;
a gear mechanism that is able to transmit power input to the input shaft to the output shaft through the counter shaft or directly; and
the transmission case according to any one of claims 1 to 7, wherein
at least any one of the input shaft, the counter shaft, and the output shaft is supported by the bulkhead member.
